Europäisches Patentamt

European Patent Office

Office européen des brevets

(11) Veröffentlichungsnummer: **0 178 515**
**B1**

(12) **EUROPÄISCHE PATENTSCHRIFT**

(45) Veröffentlichungstag der Patentschrift: **27.06.90**

(51) Int. Cl.⁵: **B 01 D 45/06**

(21) Anmeldenummer: **85112259.8**

(22) Anmeldetag: **27.09.85**

(54) Distanzhalter für Tropfenabscheider.

(30) Priorität: **18.10.84 DE 3438119**

(43) Veröffentlichungstag der Anmeldung:
**23.04.86 Patentblatt 86/17**

(45) Bekanntmachung des Hinweises auf die
Patenterteilung:
**27.06.90 Patentblatt 90/26**

(84) Benannte Vertragsstaaten:
**AT BE CH FR GB IT LI LU NL SE**

(56) Entgegenhaltungen:
**DE-A-2 521 845**
**DE-A-3 137 795**
**DE-B-2 251 173**

(73) Patentinhaber: **Munters Euroform GmbH**
**Süsterfeldstrasse 65**
**D-5100 Aachen (DE)**

(72) Erfinder: **Schultz, Martin**
**58, Rue Frepert**
**B-4729 Hauset (BE)**

(74) Vertreter: **Döring, Wolfgang, Dr. Ing.**
**Mörikestrasse 18**
**D-4000 Düsseldorf 30 (DE)**

Courier Press, Leamington Spa, England.

## Beschreibung

Die Erfindung betrifft einen Distanzhalter für Tropfenabscheider mit den Merkmalen des Oberbegriffs des Anspruchs 1.

Tropfenabscheider werden mit hohem wissenschaftlichem Aufwand entwickelt unter Berücksichtigung kleinster Druckverluste und größtmöglicher Abscheideleistung. Alle bisher bekannten Distanzhalter-Systeme sind lediglich als Funktionselemente ausgebildet, um die Abscheiderplatten in Position zu halten. Die Auswahl der Distanzhalter erfolgte nur unter Kostengesichtspunkten. So wurde beispielsweise eine Distanzierung der Abscheiderplatten mit Hilfe von Stangen vorgenommen, auf die die Abscheiderplatten mit ihren Enden abstandsweise aufgeschoben sind.

Bei der aus der DE—A 22 33 480 bekannten Distanzierung werden die Abscheiderplatten mit ihren Enden in seitliche Stützen eingesetzt.

Ein Tropfenabscheider mit Distanzhaltern gemäß dem Oberbegriff des Anspruchs 1 ist aus der DE—A 31 37 795 bekannt. Beim Aufbau dieses bekannten Tropfenabscheiders muß jeder Distanzhalter einzeln montiert, d.h. mit den Abscheiderplatten verbunden werden, was außerordentlich umständlich und zeitraubend ist. Außerdem ergibt sich beim Aufbau des Tropfenabscheiders keine selbsttragende Distanzhalterkonstruktion, die aus Stabilitätsgründen insbesondere für den Aufbau großer Einheiten erwünscht ist.

Allen bekannten Distanzhaltern haftet der Nachteil an, daß sie ohne die eingesetzten, zu distanzierenden Abscheiderplatten keine selbsttragende Konstruktion bilden.

Der Erfindung liegt die Aufgabe zugrunde, einen Distanzhalter für Tropfenabscheider der angegebenen Art zu schaffen, der den Aufbau einer stabilen selbsttragenden Konstruktion ermöglicht.

Die vorstehend genannte Aufgabe wird erfindungsgemäß durch einen Distanzhalter mit den kennzeichnenden Merkmalen des Anspruchs 1 gelöst.

Distanzhalter mit den erfindungsgemäß beanspruchten Merkmalen lösen die gestellte Aufgabe. Sie ermöglichen nämlich den Aufbau einer sehr stabilen selbsttragenden Konstruktion. Die Distanzhalter bilden in der Seitenansicht der Fläche der Abscheiderplatten angepaßte Ablaufflächen, an denen Wasser geordnet nach unten abgeleitet werden kann. Dem nach unten abströmenden Wasser stellt sich so keine Kante oder kein Vorsprung entgegen, an denen es zu Wirbeln oder Tropfenansammlung kommen kann. Außerdem wird dadurch eine außerordentlich stabile Lagerung der Abscheiderplatten an den Distanzhaltern erreicht.

Darüber hinaus haben die erfindungsgemäßen Distanzhalter den Vorteil, einfach und schnell miteinander und mit den Abscheiderplatten verbunden werden zu können. Die Distanzhalterreihen werden in Abständen von ca. 500 bis 1000 mm zueinander in horizontaler Richtung entlang den Plattenflächen angebracht. Durch möglichst einfache Verbindungsmittel, wie Schnapp- oder Steckverbindungen oder Stangen, insbesondere Gewindestangen, die durch Bohrungen im Kopf- bzw. Fußteil der Distanzhalter hindurchgesteckt werden, werden die einzelnen Distanzhalter lösbar oder unlösbar miteinander verbunden. Dabei ermöglichen die Distanzhalter eine nahezu unbegrenzte Baulänge der Abscheider.

Auch nachträglich kann noch der Abstand zwischen zwei Distanzreihen dadurch verändert werden, daß die Distanzreihen relativ zueinander entlang den Abscheiderplatten verschoben werden. Dadurch ergibt sich die weitere Möglichkeit, nachträglich eine oder mehrere vormontierte Distanzhalterreihen auf das Abscheiderpaket zu montieren.

Aus Stabilitätsgründen empfiehlt sich ein Doppel-T-Querschnittsprofil für den Steg des Distanzhalters, der auch in einer einfach gestalteten Spritzgußform preisgünstig herzustellen ist. Der Steg der Distanzhalter kann bevorzugt auch so ausgebildet sein, daß er in der Frontansicht dem Flächenprofil der Abscheiderplatten entspricht, um selbst als Abscheider wirksam werden zu können und die Leistung des Abscheiders zu erhöhen.

Anhand der Zeichnung, in der verschiedene Ausführungsbeispiele des erfindungsgemäßen Distanzhalters dargestellt sind, wird die Erfindung näher erläutert.

Es zeigen

Fig. 1 zu distanzierende Abscheiderplatten in perspektivischer Darstellung,

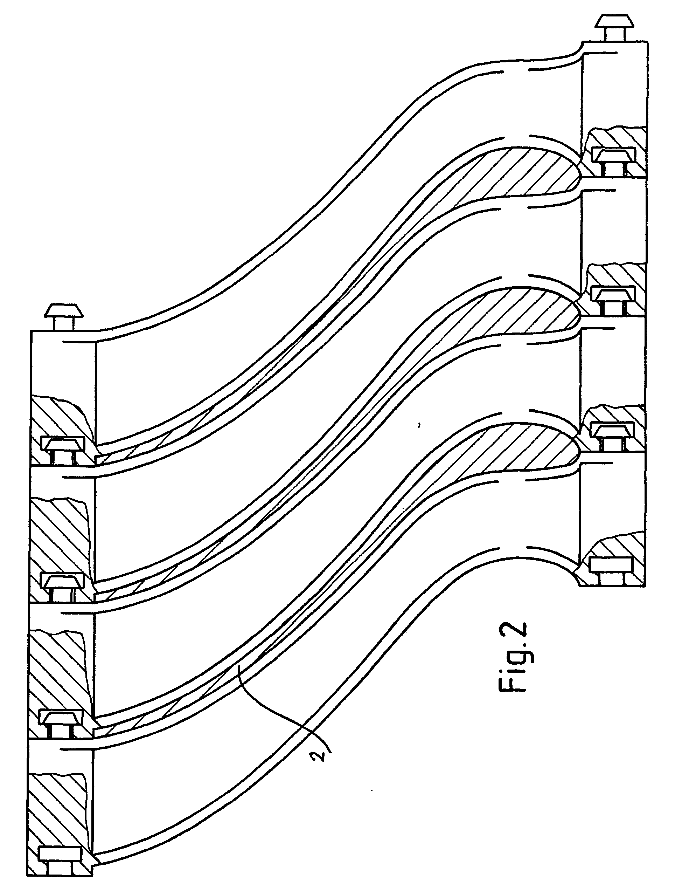

Fig. 2 im Längsschnitt Distanzhalter und Abscheiderplatten in montiertem Zustand,

Fig. 3 einen einzelnen Distanzhalter aus der in Fig. 2 dargestellten Gruppe in einer Seitenansicht,

Fig. 4 einen Schnitt längs der Linie A—B aus Fig. 3,

Fig. 5 einen Querschnitt längs der Linie C—D aus Fig. 4,

Fig. 6 ein anderes Profil im Schnitt A—B des Distanzhalters aus Fig. 3, dessen Kopf- und Fußteil gemäß

Fig. 7 auch mit einer Bohrung versehen sein kann,

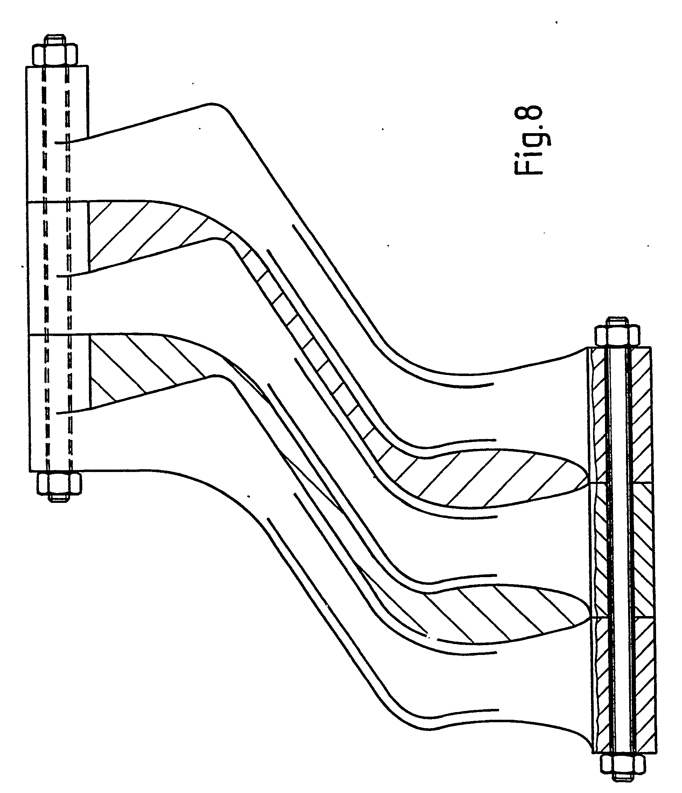

Fig. 8 im montierten Zustand anders profilierte Tropfenabscheider-Platten mit dementsprechend angepaßten Distanzhaltern in montiertem Zustand,

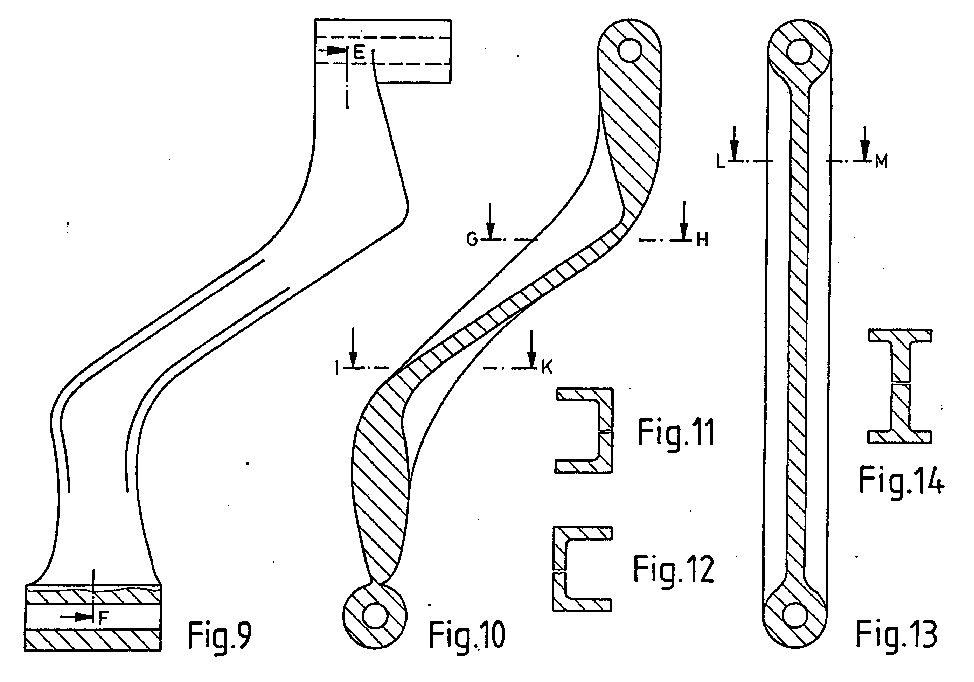

Fig. 9 eine teilweise geschnittene Seitenansicht eines einzelnen Distanzhalters,

Fig. 10 den Schnitt E—F aus Fig. 9,

Fig. 11 einen Querschnitt längs der Linie G—H in Fig. 10,

Fig. 12 einen Querschnitt längs der Linie I—K in Fig. 10,

Fig. 13 eine gegenüber der Profilform von Fig. 10 abgewandelte Profilform des Distanzhalters im Schnitt E—F aus Fig. 9,

Fig. 14 das zu der Ausführung gemäß Fig. 13 gehörige Querschnittsprofil im Schnitt L—M aus Fig. 13 und

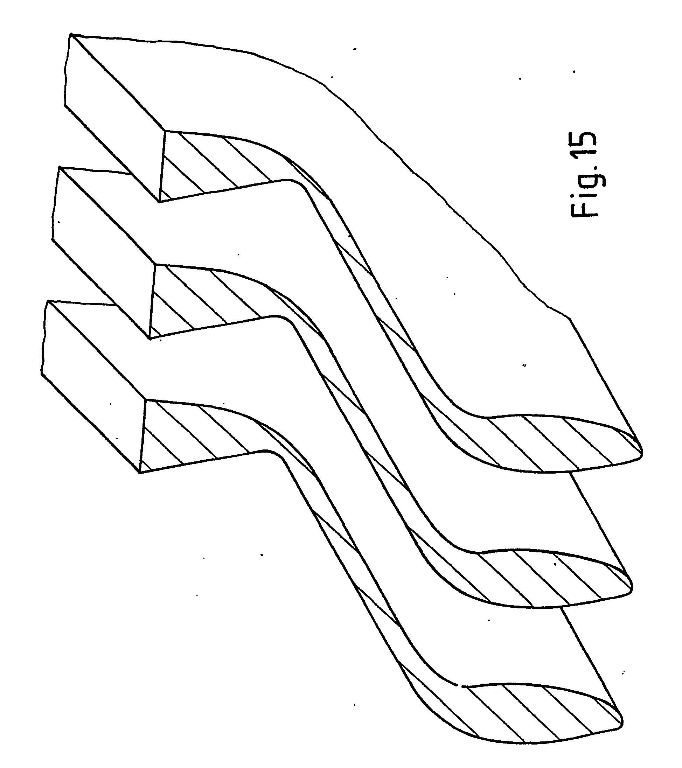

Fig. 15 die zu Fig. 8 gehörige perspektivische Darstellung der Abscheiderplatten.

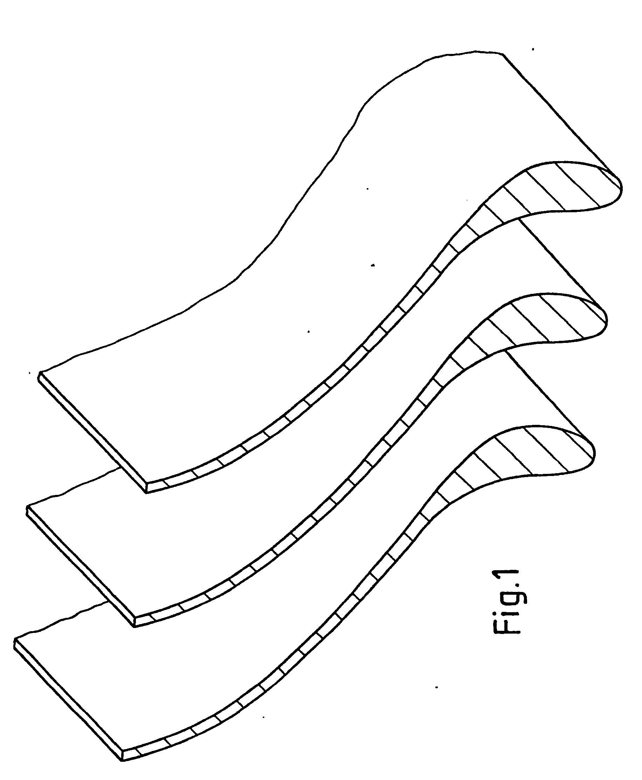

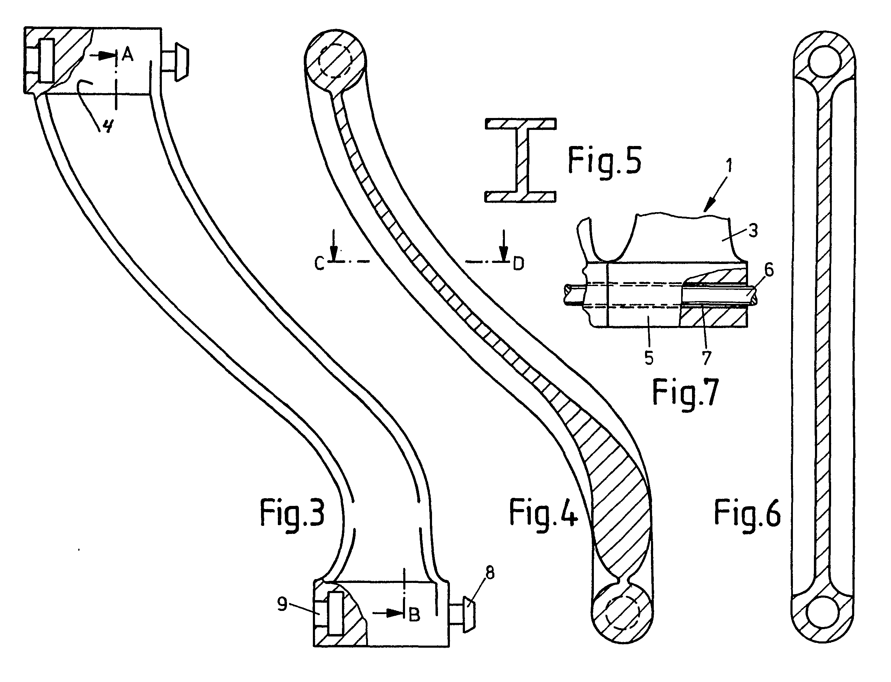

In den weitgehend aus sich heraus verständlichen Darstellungen bezeichnen in den Figuren 1 den Distanzhalter, 2 die durch ihn zu distanzierenden Abscheiderplatten, 3 den Steg, 4 den Kopfteil und 5 den Fußteil des Distanzhalters 1, 6 Stangen, die durch Bohrungen 7 im Kopf- bzw. Fußteil 4 bzw. 5 hindurchgesteckt oder -geschraubt sind und die Distanzhalter miteinander verbinden (Fig. 7). Statt der Verbindung der Distanzhalter mittels Stangen 6 können die in den übrigen Abbildungen angedeuteten Steck- oder Schnappverbindungen, bestehend aus Kopfbolzen 8 und am gegenüberliegenden Ende entsprechend geformter Sacklochbohrung 9, vorgesehen sein.

**Patentansprüche**

1. Distanzhalter für Tropfenabscheider, der eine die Höhe der zu distanzierenden Abscheiderplatten übersteigende Länge besitzt und einen Kopfteil sowie einen Fußteil aufweist, dadurch gekennzeichnet, daß der Steg (3) des Distanzhalters (1) in der Seitenansicht der Form des Zwischenraumes zwischen zwei benachbarten Abscheiderplatten (2) mit gewünschtem Abstand angepaßt ist, so daß die Abscheiderplatten (2) im montierten Zustand auf der gesamten Höhe zwischen je zwei benachbarten Distanzhaltern (1) paßgenau eingeklemmt sind, und daß der Distanzhalter (1) Mittel zum Verbinden benachbarter Kopfteile (4) und Fußteile (5) aufweist.

2. Distanzhalter nach Anspruch 1, dadurch gekennzeichnet, daß die Mittel zum Verbinden benachbarter Kopfteile (4) und Fußteile (5) lösbare oder unlösbare Schnapp- oder Steckverbindungen sind.

3. Distanzhalter nach Anspruch 1, dadurch gekennzeichnet, daß die Mittel zum Verbinden benachbarter Kopfteile (4) und Fußteile (5) Stangen (16), insbesondere Gewindestangen, sind, die durch Bohrungen (7) im Kopfteil (4) und Fußteil (5) hindurchgeführt sind.

4. Distanzhalter nach einem der Ansprüche 1 bis 3, dadurch gekennzeichnet, daß sein Steg (3) in der Frontansicht dem Flächenprofil der Abscheiderplatten (2) entspricht.

**Revendications**

1. Support distanceur pour séparateur de gouttes présentant une longueur qui dépasse la hauteur des plaques du séparateur, et ayant une partie de tête ainsi qu'une partie de pied, caractérisé en ce que l'âme (3) du distanceur (1), dans la vue en élévation latérale de la forme de l'espace intermédiaire entre deux plaques (2), voisines, du séparateur est adaptée à la distance voulue, en sorte que les plaques (2) du séparateur sont, à l'état monté, serrées exactement sur toute la hauteur entre chaque fois deux distanceurs voisins et en ce que le distanceur (1) comporte des moyens pour assembler der parties de tête (4) et des parties de pied (5) voisines.

2. Support distanceur suivant la revendication 1, caractérisé en ce que les moyens d'assemblage entre les parties de tête (4) et les parties de pied (5) voisines sont des assemblages détachables ou non, à déclic ou à enfoncement.

3. Support distanceur suivant la revendication 1, caractérisé en ce que les moyens d'assemblage de parties de tête (4) et de parties de pied (5) voisines sont des tiges (6), en particulier des tiges filetées qui sont passées à travers des forures (7) dans la partie de tête (4) et dans la partie de pied (5).

4. Support distanceur suivant l'une des revendications 1 à 3, caractérisé en ce que son âme (3) correspond, dans la vue en élévation de face, au profil de surface des plaques (2) du séparateur.

**Claims**

1. A spacer for mist eliminators which possesses a length exceeding the height of the eliminator plates to be spaced, said spacer having a head part and a foot part, characterized in that the web (3) of the spacer (1), in the side view, is adapted to the shape of the space between two adjacent eliminator plates (2) with desired distance so that the eliminator plates (2), in their mounted condition, are fittingly clamped between two adjacent spacers (1) along the complete height, and in that the spacer (1) includes means for connecting adjacent head parts (4) and foot parts (5).

2. The spacer according to claim 1, characterized in that said means for connecting adjacent head parts (4) and foot parts (5) are detachable or undetachable snap-lock or plug connections.

3. The spacer according to claim 1, characterized in that said means for connecting adjacent head parts (4) and foot parts (5) are rods (16), especially threaded rods, which are passed through bores (7) in the head part (4) and foot part (5).

4. The spacer according to claims 1 to 3, characterized in that the shape of its web (3), in front view, corresponds to the face profile of the eliminator plates (2).

Fig.1

Fig.2

Fig.3

Fig.4

Fig.5

Fig.6

Fig.7

EP 0 178 515 B1

Fig.8

Fig.9

Fig.10

Fig.11

Fig.12

Fig.13

Fig.14

EP 0 178 515 B1

Fig.15

6